# EUROPEAN PATENT APPLICATION

(11) **EP 2 541 580 A1**
(43) Date of publication of application: **02.01.2013**
(21) Application number: 11192349.6
(22) Date of filing: 07.12.2011
(51) Int. Cl.: H01J 1/304, H01J 63/02

(54) **Field emission panel and liquid crystal display apparatus having the same**

(30) Priority: 27.06.2011 KR 20110062327
(71) Applicant: Samsung Electronics Co., Ltd., Suwon-si, Gyeonggi-do, 443-742 (KR)
(72) Inventor: Suh, Kwang-jong, Gyeonggi-do (KR); Ha, Jae-sang, Chungcheongnam-do (KR)
(74) Representative: Grootscholten, Johannes A.M.

(57) **Abstract**

A field emission panel includes a cathode electrode which is formed on a substrate, a multilayered carbon nano tube which is formed on the cathode electrode, and a gate electrode which is positioned at a distance from the multilayered carbon nano tube. The multilayered carbon nano tube has a minimum thermal decomposition temperature higher than a temperature of a heating process which is performed when the field emission panel is manufactured, and has three peaks of Raman scattered light in a Raman intensity distribution characteristic.

## Description

### CROSS-REFERENCE TO RELATED APPLICATIONS

This application claims priority from Korean Patent Application No. 10-2011-0062327, filed on June 27, 2011, in the Korean Intellectual Property Office, the disclosure of which is incorporated herein by reference in its entirety.

### BACKGROUND

### 1. Field

Methods and apparatuses consistent with exemplary embodiments relate to a field emission panel and a liquid crystal display (LCD) apparatus having the same.

### 2. Description of the Related Art

A field emission material refers to a material that emits electrons, if an electric field is generated around it in a vacuum, and a representative example of the field emission material is a carbon nano tube. Using such a field emission material, a panel generating light may be manufactured. This type of panel will be referred to as a "field emission panel", hereinafter.

In order to manufacture a field emission panel or an LCD apparatus using a related-art carbon nano tube, the following problems should be solved. The related-art field emission panel or LCD apparatus is manufactured by applying a glass substrate. However, in this case, a high temperature heating process should be essentially performed in order to reduce excess gas, which may cause a big problem in a vacuum device.

However, since the related-art carbon nano tube has a low thermal decomposition temperature, there is a problem that emission and lifespan characteristics of the carbon nano tube become noticeably degraded after the high temperature heating process. Also, a general heating process is performed in air. However, the related-art carbon nano tube may abruptly deteriorate when subjected to both a high temperature and air, and thus, the carbon nano tube almost loses its function as a field emission material. Also, there is another problem that the related-art carbon nano tube may have a reduced lifespan when subjected to the degree of vacuum of 10⁻⁶ torr that is realistically attainable. As such, the field emission panel or the LCD apparatus applying the related-art carbon nano tube may have a reduced effectiveness of utility.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provides a field emission panel which comprises a carbon nano tube having good thermal decomposition and high crystallinity, and an LCD apparatus having the same.

According to an aspect of an exemplary embodiment, there is provided a field emission panel comprising: a cathode electrode which is formed on a substrate; a multilayered carbon nano tube which is formed on the cathode electrode, wherein the multilayered carbon nano tube has a thermal decomposition start temperature higher than a temperature of a heating process which is performed when the field emission panel is manufactured, and has three peaks of Raman scattered light in a Raman intensity distribution characteristic; and a gate electrode which is distanced from the multilayered carbon nano tube.

The temperature of the heating process may be approximately equal to 500° C.

One of the three peaks of the Raman scattered light may be a first peak of Raman scattered light that appears in a range of a Raman shift of 1860±10 kayser in a Raman intensity distribution characteristic which is detected by irradiating a laser of a wavelength of 514.5m.

The others of the three peaks of the Raman scattered light may be a second peak of Raman scattered light that appears in a range of a Raman shift of 1580±10 kayser in the Raman intensity distribution characteristic which is detected by irradiating the laser of the wavelength of 514.5m, and a third peak of Raman scattered light that appears in a range of a Raman shift of 1360±10 kayser.

A ratio of intensity of the third peak of the Raman scattered light to intensity of the second peak of the Raman scattered light may be approximately within the range of between 0.1 and 0.4.

According to an aspect of another exemplary embodiment, there is provided a liquid crystal display (LCD) apparatus comprising: a field emission panel which comprises a cathode electrode formed on a substrate, a multilayered carbon nano tube formed on the cathode electrode, and a gate electrode distanced from the multilayered carbon nano tube; a liquid crystal panel which is disposed on a front of the field emission panel and converts white light generated from the field emission panel into a color image; and a housing which houses the field emission panel and the liquid crystal panel, wherein the multilayered carbon nano tube has a thermal decomposition start temperature higher than a temperature of a heating process which is performed when the field emission panel is manufactured, and has three peaks of Raman scattered light in a Raman intensity distribution characteristic.

The temperature of the heating process may be approximately equal to 500° C.

One of the three peaks of the Raman scattered light may be a first peak of Raman scattered light that appears in a range of a Raman shift of 1860±10 kayser in a Raman intensity distribution characteristic which is detected by irradiating a laser of a wavelength of 514.5m.

The others of the three peaks of the Raman scattered light may be a second peak of Raman scattered light that appears in a range of a Raman shift of 1580±10 kayser in the Raman intensity distribution characteristic which is detected by irradiating the laser of the wavelength of 514.5m, and a third peak of Raman scattered light that appears in a range of a Raman shift of 1360±10 kayser.

A ratio of intensity of the third peak of the Raman scattered light to intensity of the second peak of the Raman scattered light may be approximately within the range of between 0.1 and 0.4.

According to the above exemplary embodiments, since the thermal decomposition start temperature of the carbon nano tube in air is higher than the temperature of the heating process, which is performed when the field emission panel is manufactured, a high temperature heating process can be achieved, adsorbed gas such as moisture and remaining carbon-based components in the field emission panel can be removed in advance, a high degree of vacuum can be maintained for a long time, and the performance of the field emission panel can be improved.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

The above and/or other aspects will be more apparent by describing in detail exemplary embodiments, with reference to the accompanying drawings, in which:
FIG. 1 is a schematic perspective view illustrating a field emission panel according to an exemplary embodiment;
FIG. 2 is a schematic plane view illustrating the field emission panel according to the exemplary embodiment of FIG. 1;
FIG. 3 is a schematic cross sectional view taken along the line III-III of FIG. 1;
FIG. 4 is an enlarged cross sectional view of the area A of FIG. 3;
FIG. 5 is a schematic cross sectional view illustrating a liquid crystal display (LCD) apparatus according to an exemplary embodiment;
FIG. 6 is a schematic cross sectional view illustrating a field emission display apparatus according to an exemplary embodiment;
FIG. 7 is a graph comparing thermal decomposition of a multilayered carbon nano tube according to an exemplary embodiment with that of a related-art carbon nano tube;
FIG. 8 is a graph comparing a Raman spectrum of the multilayered carbon nano tube according to an exemplary embodiment with that of the related-art carbon nano tube; and
FIG. 9 is a graph comparing a current reducing characteristic of the multilayered carbon nano tube according to an exemplary embodiment with that of the related-art carbon nano tube.

### DETAILED DESCRIPTION

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

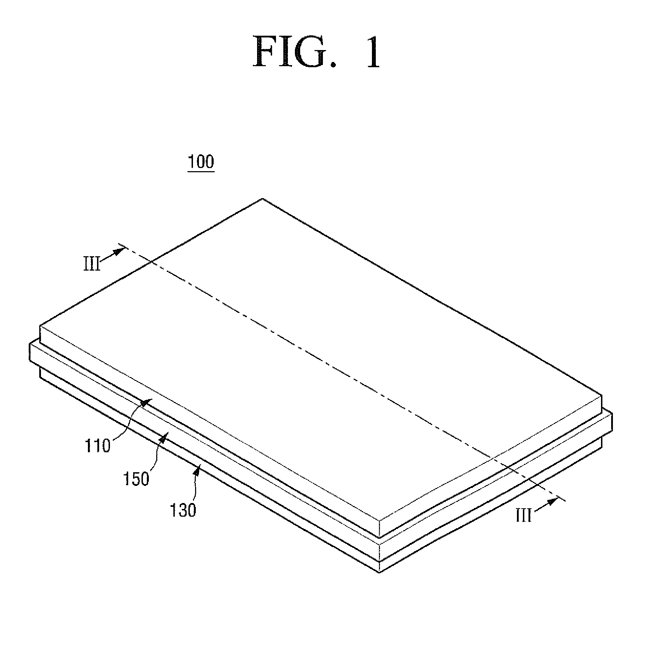

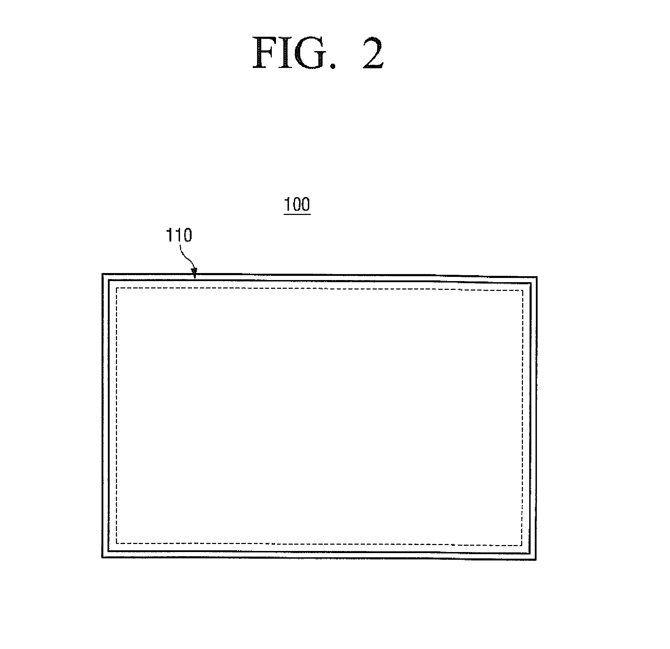

FIGS. 1 to 4 illustrate, from different angles, a field emission panel according to an exemplary embodiment.

That is, according to an exemplary embodiment, a field emission panel 100 comprises a cathode electrode 141, a multilayered carbon nano tube 143, and a gate electrode 145.

The cathode electrode 141 is formed on a substrate and the multilayered carbon nano tube 143 is formed on the cathode electrode 141.

The multilayered carbon nano tube 143 has a minimum thermal decomposition temperature higher than a temperature of a heating process, which is performed when the field emission panel 100 is manufactured. Also, the multilayered carbon nano tube 143 has a Raman intensity distribution characteristic which includes three peaks of Raman scattered light.

Also, the gate electrode 145 is positioned at a distance from the multilayered carbon nano tube 143.

FIG. 1 is a schematic perspective view of the field emission panel according to an exemplary embodiment. Referring to FIG. 1, the substrate comprises an upper plate 110 and a lower plate 130, which are sealed by a sealing member 150.

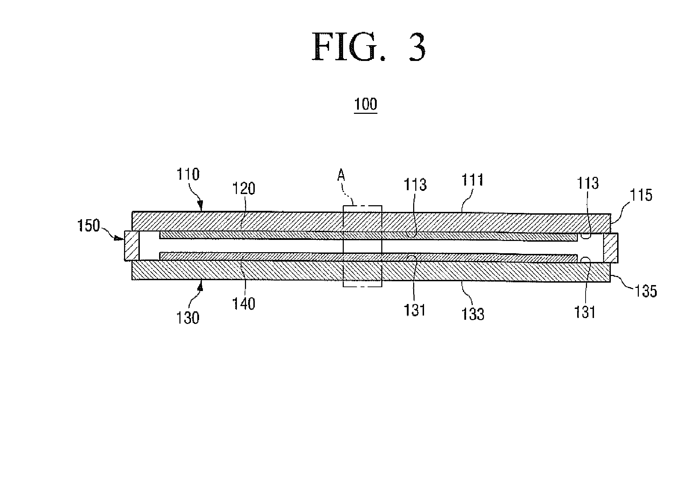

The upper plate 110 may include a glass material having light penetrability. The upper plate 110 has a rectangular plate shape. Accordingly, as shown in FIG. 3, the upper plate 110 comprises a top surface 111 and a bottom surface 113 which have relatively large areas, and four edge surfaces 115 which have relatively small areas. As shown in FIG. 3, the upper plate 110 comprises a light emission unit 120 formed on an inner surface thereof.

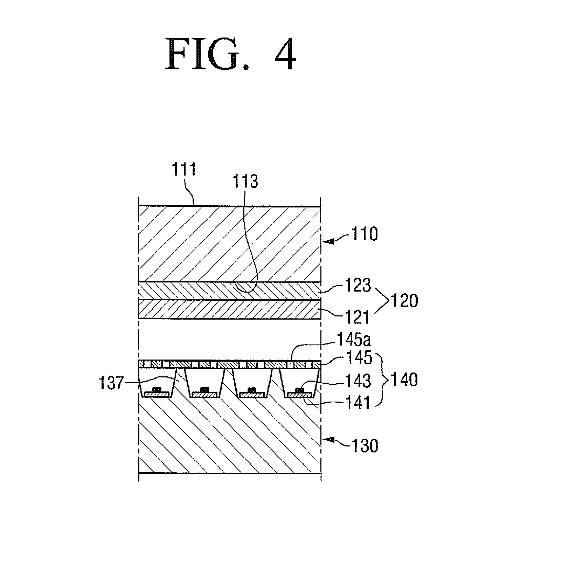

As shown in FIG. 4, the light emission unit 120 comprises an anode electrode 123 and a fluorescent layer 121.

The lower plate 130 is disposed in parallel to the above-described upper plate 110. Like the upper plate 110, the lower plate 130 may include a glass material having light penetrability and has a rectangular plate shape. Accordingly, as shown in FIG. 3, the lower plate 130 has a top surface 131 and a bottom surface 133 which have relatively large areas, and four edge surfaces 135 which have relatively small areas. As shown in FIG. 3, the lower plate 130 comprises an electron emission unit 140 formed on an inner surface thereof. As shown in FIG. 4, the electron emission unit 140 comprises a plurality of cathode electrodes 141, a plurality of field emission materials 143, and the gate electrode 145.

Each pair of adjacent cathode electrodes 141 are spatially separated from each other by a respective partition formed on the lower plate 130. The plurality of field emission materials 143 are mounted on the single cathode electrode 141. Since the emitting ability of the field emission material 143 is closely related to the crystallinity of the carbon nano tube, the field emission material 143 according to the exemplary embodiment is manufactured with the multilayered carbon nano tube 143 having high crystallinity, rather than a single-layered carbon nano tube, in order to improve the emitting ability.

The gate electrode 145 comprises a plurality of penetrating holes 145a through which electrons emitted from the multilayered carbon nano tube 143 pass.

Voltage is applied to the cathode electrode 141, the gate electrode 145, and the anode electrode 123 so that electric fields necessary for the emission and acceleration of the electrons are generated. That is, electrons are emitted from the multilayered carbon nano tube 143 due to the electric field generated between the cathode electrode 141 and the gate electrode 145, and the emitted electrons are accelerated toward the florescent layer 121 due to the electric field generated between the gate electrode 145 and the anode electrode 123. When the accelerated electrons collide with the fluorescent layer 121, light is generated from the fluorescent layer 121.

The fluorescent layer 121 comprises a red-fluorescent substance corresponding to red light, a green-fluorescent substance corresponding to green light, and a blue-fluorescent substance corresponding to blue light. These three types of fluorescent substances are uniformly distributed over the upper plate 110 in the fluorescent layer 121 without a specific pattern, and white light may be generated from the fluorescent layer 121. The field emission panel 100 comprising the fluorescent layer 121 generating the white light may be used as a backlight unit for a display apparatus. In another exemplary embodiment, the three types of fluorescent substances may be distributed over the upper plate 110 with a specific pattern. For example, many fluorescent substance groups consisting of the red-fluorescent substance, the green-fluorescent substance, and the blue-fluorescent substance may be distributed over the upper plate 110 with a regular pattern. From the fluorescent layer 123, multi-color light may be generated, and accordingly, a color image would be realized. The field emission panel 100 comprising the fluorescent layer 123 which is capable of realizing the color image may be used as a display panel of a field emission display.

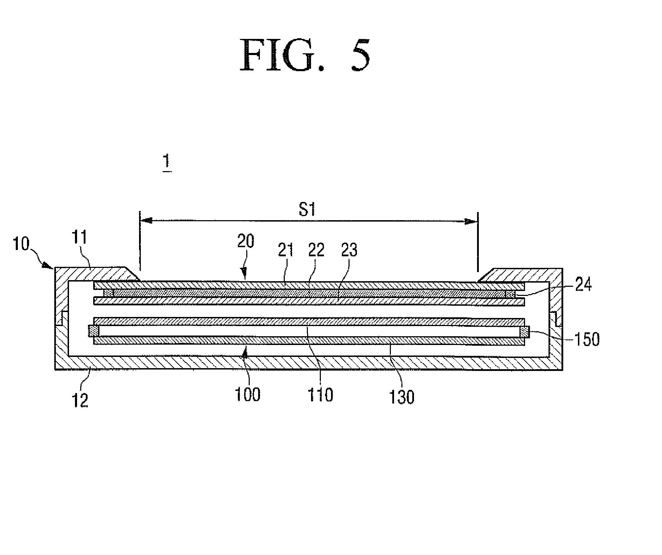

FIG. 5 is a schematic cross sectional view illustrating a liquid crystal display (LCD) apparatus according to an exemplary embodiment.

Referring to FIG. 5, an LCD apparatus 1 comprises a housing 10, a liquid crystal panel 20, and the above-described field emission panel 100.

The housing 10 houses parts of the display apparatus comprising the liquid crystal panel 20 and the field emission panel 100. The housing 10 comprises a front housing 11 and a rear housing 12. The front housing 11 has an opening formed on a front portion thereof to expose a screen area S1 to the outside.

The liquid crystal panel 20 comprises a color filter substrate 21, in which a color filter layer is formed, and a thin film transistor substrate 23, in which a thin film transistor is formed. A liquid crystal layer 22 is filled between the two substrates 21 and 23. The color filter substrate 21 and the thin film transistor substrate 23 are sealed and bonded to each other by a sealant 24.

The field emission panel 100 is disposed on a rear surface of the liquid crystal panel 20, and generates light and irradiates the light toward the liquid crystal panel 20. When the light irradiated toward the liquid crystal panel 20 passes through the liquid crystal layer 22, an amount of penetrating light is adjusted and the light is then converted into the color image by the color filter substrate 21.

As described above, the field emission panel 100 may be applied as a backlight unit of the LCD apparatus 1. In this case, the fluorescent layer 121 provided on the upper plate 110 of the field emission panel 100 generates the white light. Accordingly, the fluorescent layer 121 in which the red-fluorescent substance, the green-fluorescent substance, and the blue-fluorescent substance are uniformly distributed without a specific pattern is applied.

The LCD apparatus 1 accommodating the field emission panel 100 and the liquid crystal panel 20 according to the exemplary embodiment may be defined as an apparatus employed in a whole apparatus, such as, for example, a television.

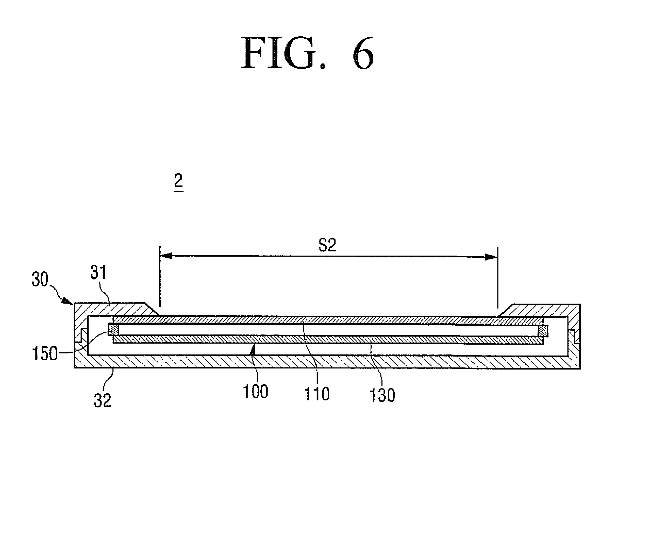

FIG. 6 is a schematic cross sectional view of a field emission display apparatus according to an exemplary embodiment.

Referring to FIG. 6, a field emission display apparatus 2 comprises a housing 30 and the field emission panel 100 according to the above-described exemplary embodiment.

The housing 30 houses parts of a display apparatus comprising the field emission panel 100. The housing 30 comprises a front housing 31 and a rear housing 32, and the front housing 31 has an opening formed on a front portion thereof to expose a screen area S2 to the outside.

The field emission panel 100 is a display panel that can realize a color image by itself, i.e., without any assistance of a backlight unit. Accordingly, the fluorescent layer 123 (see FIG. 4) provided on the upper plate 110 of the field emission panel 100 should be a layer that can generate multi-color light. Accordingly, a fluorescent layer 123 in which many fluorescent substance groups including a red-fluorescent substance, a green-fluorescent substance, and a blue-fluorescent substance are distributed over the upper plate 110 with a regular pattern is applied.

Hereinafter, the multilayered carbon nano tube 143, which is a field emission material according to an exemplary embodiment, will be described.

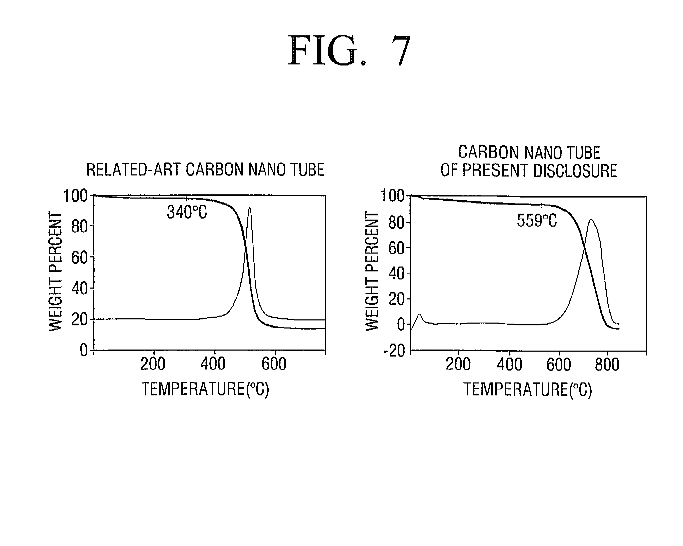

FIG. 7 is a pair of graphs to illustrate a comparison between a thermal decomposition of the multilayered carbon nano tube according to an exemplary embodiment and a corresponding thermal decomposition of a related-art carbon nano tube.

As indicated in the comparison between the thermal decomposition of the multilayered carbon nano tube according to an exemplary embodiment and the thermal decomposition of the related-art carbon nano tube, a minimum thermal decomposition temperature of the related-art carbon nano tube is approximately equal to 300°C or higher (e.g., 340°C). As such, in the case of the related-art carbon nano tube, the thermal decomposition temperature is relatively low, and thus the related-art carbon nano tube abruptly deteriorates if a high temperature heating process (typically, a process having a temperature greater than 400°C , such as, for example, a process having a temperature of approximately 500°C) is performed for the LCD apparatus 1 or the field emission display 2 in air.

By contrast, the multilayered carbon nano tube 143 according to an exemplary embodiment shows a minimum thermal decomposition temperature of approximately 500°C or higher in air. In FIG. 7, the minimum thermal decomposition temperature is 559°C. However, any minimum thermal decomposition temperature may be applied provided that it is 500°C or higher. According to the exemplary embodiment, since the temperature at which the thermal decomposition of multilayered carbon nano tube 143 starts is higher that the temperature of the general heating process, the multilayered carbon nano tube is prevented from deteriorating in the heating process, and adsorbed gases relating to moisture and carbon-based components remaining in the LCD apparatus 1 can be removed in advance.

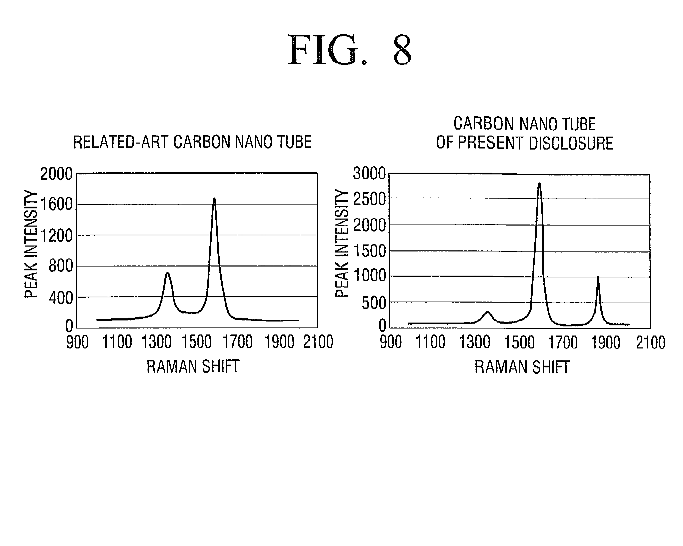

FIG. 8 is a pair of graphs to illustrate a comparison between a Raman spectrum corresponding to a multilayered carbon nano tube according to an exemplary embodiment and a Raman spectrum corresponding to the related-art carbon nano tube.

The Raman spectrum is obtained by Raman spectroscopic analysis. The Raman spectroscopic analysis is a well-known technique for molecular characteristic crystal identification and quantitative analysis. The Raman spectroscopic analysis yields information on a vibration-rotation state of a molecule using a line inelastically scattered from a non-resonant and non-ionized radiation source, typically, a visible ray light source or a near infrared ray light source (using a laser for purposes of the present disclosure). The Raman spectrum is typically illustrated as a plot of intensity (arbitrary units) versus Raman shift. The Raman shift refers to a difference in energy or wavelength between an excited line and a scattered line. The Raman shift is typically expressed in wavenumbers (cm⁻¹), that is, reported as an inverse number of a wavelength shift (cm). A spectrum range of the obtained Raman spectrum is not specifically defined, but a useful range includes a Raman shift corresponding to a general range of a frequency of polyatomic vibration, that is, typically within the range of approximately between 100 and 4000 cm⁻¹.

Referring to FIG. 8, in a Raman intensity distribution characteristic detected by irradiating laser of a wavelength of 514.5m, the multilayered carbon nano tube 143 according to an exemplary embodiment has a first peak of Raman scattered light within a range of a Raman shift of 1360±10 kayser, a second peak of Raman scattered light within a range of a Raman shift of 1580±10 kayser, and a third peak of Raman scattered light within a range of a Raman shift of 1860±10 kayser. A ratio of the intensity of the first peak to the intensity of the second peak ranges approximately from 0.1 to 0.4.

By contrast, the related-art carbon nano tube has peaks of Raman scattered light corresponding respectively to the first peak and the second peak of the Raman scattered light according to an exemplary embodiment, but does not have a peak of Raman scattered light corresponding to the third peak of the Raman scattered light of the exemplary embodiment.

Typically, the Raman scattered light peak which occurs approximately in the range 1580 ± 10 kayser indicates the presence of a carbon-based material that has no structural defect and has high crystallinity among the carbon-based materials included in the electron emission material, and the Raman scattered light peak which occurs approximately the range 1360 ± 10 kayser indicates the presence of a carbon-based material that has a structural defect and has low crystallinity among the carbon-based materials included in the electron emission material.

In the case of the related-art carbon nano tube, the intensity of the peak indicating the presence of a carbon-based material with high crystallinity is approximately equal to 1600, and the intensity of the peak indicating the presence of a carbon-based material with low crystallinity is approximately equal to 700. Typically, in the case of a carbon nano tube with high crystallinity, a ratio of the intensity of the peak indicating the presence of the carbon-based material with low crystallinity to the intensity of the peak indicating the presence of the carbon-based material with high crystallinity may fall within the range of 0.1 to 0.4. However, in the case of the related-art carbon nano tube, the ratio of the intensities of the peaks is approximately equal to ratio of the intensities of the peaks is approximately equal to 0.44, which exceeds 0.4.

In the case of the multilayered carbon nano tube 143 according to an exemplary embodiment, the intensity of the second peak indicating the presence of the carbon-based material with high crystallinity is approximately equal to 2700, and the intensity of the first peak indicating the presence of the carbon-based material with low crystallinity is approximately equal to 400. Therefore, a ratio of the intensity of the first peak to the intensity of the second peak is approximately equal to 0.15. This result is due to the presence of the third peak of the Raman scattered light in the range of the Raman shift of 1860 ± 10 kayser. That is, the multilayered carbon nano tube with high crystallinity can be formed due to the presence of the third peak.

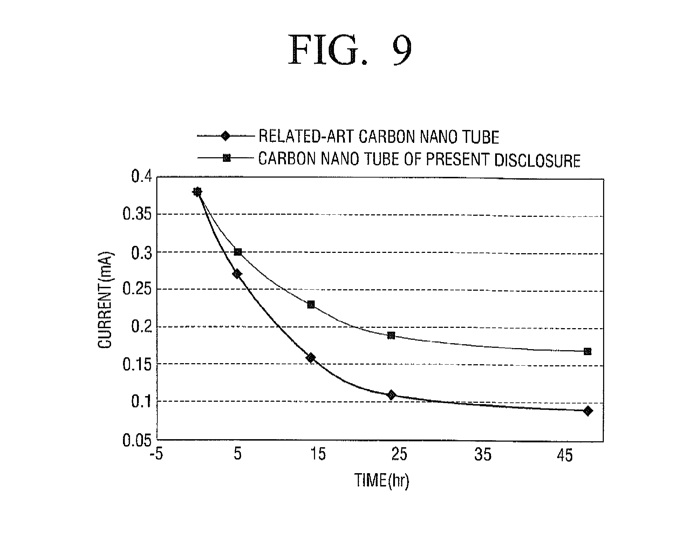

FIG. 9 is a graph illustrating a current reducing characteristic of a multilayered carbon nano tube according to an exemplary embodiment and a corresponding current reducing characteristic of the related-art carbon nano tube.

As shown in FIG. 9, a rate of reduction of the current in the multilayered carbon nano tube according to an exemplary embodiment is greater than in the related-art carbon nano tube, thereby resulting in an increasing reduction in overall current in the multilayered carbon nano tube according to an exemplary embodiment as time elapses.

The multilayered carbon nano tube 143 of an exemplary embodiment has better thermal decompression and higher crystallinity than the related-art carbon nano tube, and thus does not cause deterioration as the field emission material. Therefore, a long lifespan can be guaranteed, even in the degree of vacuum of 10⁻⁶ torr that is realistically attainable.

While exemplary embodiments of the present inventive concept have been particularly shown and described, it will be understood by those of ordinary skill in the art that various changes in form and details may be made therein without departing from the spirit and scope of the present inventive concept, as defined by the appended claims. The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art. Therefore, the scope of the present inventive concept is defined not by the detailed description of the exemplary embodiments but by the appended claims, and all differences within the scope will be construed as being included in the present disclosure.

## Claims

1. A field emission panel comprising:
a cathode electrode which is formed on a substrate;
a multilayered carbon nano tube which is formed on the cathode electrode, has a minimum thermal decomposition temperature higher than a temperature of a heating process which is performed when the field emission panel is manufactured, and has three peaks of Raman scattered light in a Raman intensity distribution characteristic; and
a gate electrode which is positioned at a distance from the multilayered carbon nano tube.

2. The field emission panel as claimed in claim 1, wherein the temperature of the heating process is 500° C.

3. The field emission panel as claimed in claim 1, wherein one of the three peaks of the Raman scattered light is a first peak of Raman scattered light that appears in a range of a Raman shift of 1860±10 kayser in a Raman intensity distribution characteristic which is detected by irradiating a laser of a wavelength of 514.5m.

4. The field emission panel as claimed in claim 3, wherein the others of the three peaks of the Raman scattered light are a second peak of Raman scattered light that appears in a range of a Raman shift of 1580±10 kayser in the Raman intensity distribution characteristic which is detected by irradiating the laser of the wavelength of 514.5m, and a third peak of Raman scattered light that appears in a range of a Raman shift of 1360±10 kayser.

5. The field emission panel as claimed in claim 4, wherein a ratio of an intensity of the third peak of the Raman scattered light to an intensity of the second peak of the Raman scattered light is within a range of between 0.1 and 0.4.

6. A liquid crystal display (LCD) apparatus comprising:
a field emission panel which comprises a cathode electrode formed on a substrate, a multilayered carbon nano tube formed on the cathode electrode, and a gate electrode positioned at a distance from the multilayered carbon nano tube;
a liquid crystal panel which is disposed on a front of the field emission panel and converts white light generated from the field emission panel into a color image; and
a housing which houses the field emission panel and the liquid crystal panel,
wherein the multilayered carbon nano tube has a minimum thermal decomposition temperature higher than a temperature of a heating process which is performed when the field emission panel is manufactured, and has three peaks of Raman scattered light in a Raman intensity distribution characteristic.

7. The LCD apparatus as claimed in claim 6, wherein the temperature of the heating process is 500° C.

8. The LCD apparatus as claimed in claim 6, wherein one of the three peaks of the Raman scattered light is a first peak of Raman scattered light that appears in a range of a Raman shift of 1860±10 kayser in a Raman intensity distribution characteristic which is detected by irradiating a laser of a wavelength of 514.5m.

9. The LCD apparatus as claimed in claim 8" wherein the others of the three peaks of the Raman scattered light are a second peak of Raman scattered light that appears in a range of a Raman shift of 1580±10 kayser in the Raman intensity distribution characteristic which is detected by irradiating the laser of the wavelength of 514.5m, and a third peak of Raman scattered light that appears in a range of a Raman shift of 1360±10 kayser.

10. The LCD apparatus as claimed in claim 9, wherein a ratio of an intensity of the third peak of the Raman scattered light to an intensity of the second peak of the Raman scattered light is within a range of between 0.1 and 0.4.
